# EUROPÄISCHE PATENTSCHRIFT

(11) **EP 1 075 593 B1**
(45) Veröffentlichungstag und Bekanntmachung des Hinweises auf die Patenterteilung: **03.12.2003**
(21) Anmeldenummer: 99957251.4
(22) Anmeldetag: 28.09.1999
(51) Int. Cl.: F02D 41/14, F02D 41/40, F02D 41/30

(54) **KRAFTSTOFFEINSPRITZVERFAHREN FÜR EINE BRENNKRAFTMASCHINE**
FUEL INJECTION METHOD FOR AN INTERNAL COMBUSTION ENGINE
PROCEDE D'INJECTION DE CARBURANT POUR UN MOTEUR A COMBUSTION INTERNE

(30) Priorität: 01.03.1999 DE 19908729
(43) Veröffentlichungstag der Anmeldung: 14.02.2001
(73) Patentinhaber: ROBERT BOSCH GMBH, 70442 Stuttgart (DE)
(72) Erfinder: SCHRAY, Bernhard, D-71739 Oberriexingen (DE); EDELMANN, Thomas, D-74379 Ingersheim (DE)
(86) Internationale Anmeldenummer: DE9903108
(87) Internationale Veröffentlichungsnummer: WO00052317

(56) Entgegenhaltungen:
- EP-A- 0 539 921
- EP-A- 0 849 459
- JP-A- 7 189 767
- US-A- 4 704 999
- US-A- 5 163 405
- US-A- 5 713 328
- PATENT ABSTRACTS OF JAPAN vol. 012, no. 315 (M-735), 26. August 1988 (1988-08-26) & JP 63 085238 A (MAZDA MOTOR CORP), 15. April 1988 (1988-04-15)
- PATENT ABSTRACTS OF JAPAN vol. 1998, no. 03, 27. Februar 1998 (1998-02-27) & JP 09 303189 A (MITSUBISHI ELECTRIC CORP), 25. November 1997 (1997-11-25) & US 5 947 077 A

## Beschreibung

### Stand der Technik

Die Erfindung betrifft ein Kraftstoffeinspritzverfahren für eine Brennkraftmaschine, insbesondere eines Kraftfahrzeugs.

Zur Senkung des Verbrauchs und zur Erhöhung des Drehmoments wird bei Brennkraftmaschinen ein hohes Verdichtungsverhältnis angestrebt. Mit zunehmendem Verdichtungsverhältnis jedoch steigt die Gefahr einer unkontrolliert eintretenden Selbstenflammung des Luft-Kraftstoff-Gemischs. Als Folgeerscheinung tritt eine klopfende Verbrennung auf. Man unterscheidet zwei Arten von Klopfen, das sogenannte Beschleunigungeklopfen bei geringen Drehzahlen und hoher Last (als Klingeln hörbar), sowie das (nicht hörbare) Hochdrehzahlklopfen bei hoher Drehzahl und hoher Last. Das Hochdrehzahlklopfen ist für den Motor besonders kritisch.

Die klopfende Verbrennung erzeugt Druckschwingungen, welche sich dem normalen Druckverlauf überlagern.

Anhaltendes Klopfen verursacht schwere Schäden an der Brennkraftmaschine (zerstörte Zylinderkopfdichtung, Lagerschaden, Löcher im Kolben) und Schäden an den Zündkerzen.

Die Klopfgrenze hängt unter anderem von der Bauart der Brennkraftmaschine und vom Kraftstoff ab. Die Klopffestigkeit von Otto-Kraftstoffen ist durch die Oktanzahl (OZ) gekennzeichnet. Je höher diese Zahl ist, desto klopffester ist der Kraftstoff.

Die vom Verbrennungsraum ausgehenden Schwingungen werden von einem Klopfsensor erfaßt. Das Ausgangssignal des Klopfsensors wird einer Steuereinrichtung der Brennkraftmaschine zugeführt. Die Steuereinrichtung wertet das Klopfsignal aus und leitet bei Erkennen einer klopfenden Verbrennung geeignete Gegenmaßnahmen ein. Hierzu wird in der Regel der Zündzeitpunkt so weit in Richtung "spät" verstellt, bis die Klopf grenze wieder unterschritten ist.

JP-A-07 189 767 offenbart, daß bei einer Brennkraftmaschine mit einer ersten Einspritzung die im Ansaugtakt beginnt, klopfen verhindert werden kann durch eine zweite Einspritzung im Kompressionstakt.

Der vorliegenden Erfindung liegt die Aufgabe zugrunde, ein Verfahren der gattungsgemäßen Art derart zu verbessern, daß ein Betrieb einer Brennkraftmaschine an ihren Betriebsgrenzen ohne Drehmomenteinbußen aufgrund "klopfender" Verbrennung möglich wird.

Die Aufgabe der vorliegenden Erfindung wird mit den Merkmalen des Anspruchs 1 gelöst.

### Vorteile der Erfindung

Der besonders große Vorteil der vorliegenden Erfindung liegt darin, daß eine Erhöhung des maximalen abgegebenen Drehmoments der Brennkraftmaschine erreicht wird. Weiterhin wird die Klopfgrenze heraufgesetzt, d.h. die Brennkraftmaschine wird "klopffester".

Ein weiterer Vorteil ist, daß bei einer Klopfregelung mit Hilfe von Doppeleinspritzungen nur eine geringe Drehmomentreduzierung im Vergleich zur Klopfregelung mit Hilfe der Zündwinkelspätverstellung erfolgt. Um die Brennkraftmaschine in dem optimalen Betriebspunkt zu betreieben, ist eine Klopfregelung über Doppeleinspritzung und Zündwinkeleingriff bzw. ein kombinierter Eingriff aus beiden möglich.

Weitere Vorteile der Erfindung ergeben sich in Verbindung mit den Unteransprüchen aus der nachfolgenden Beschreibung von Ausführungsbeispielen.

### Zeichnung

Ausführungsbeispiele der Erfindung sind in der Zeichnung dargestellt und in der nachfolgenden Beschreibung näher erläutert.

Die Figur 1 zeigt schematisch eine Darstellung einer Brennkraftmaschine mit einem Steuergerät.

Die Figur 2 zeigt ein Betriebskennfeld einer Brennkraftmaschine.

### Beschreibung der Ausführungsbeispiele

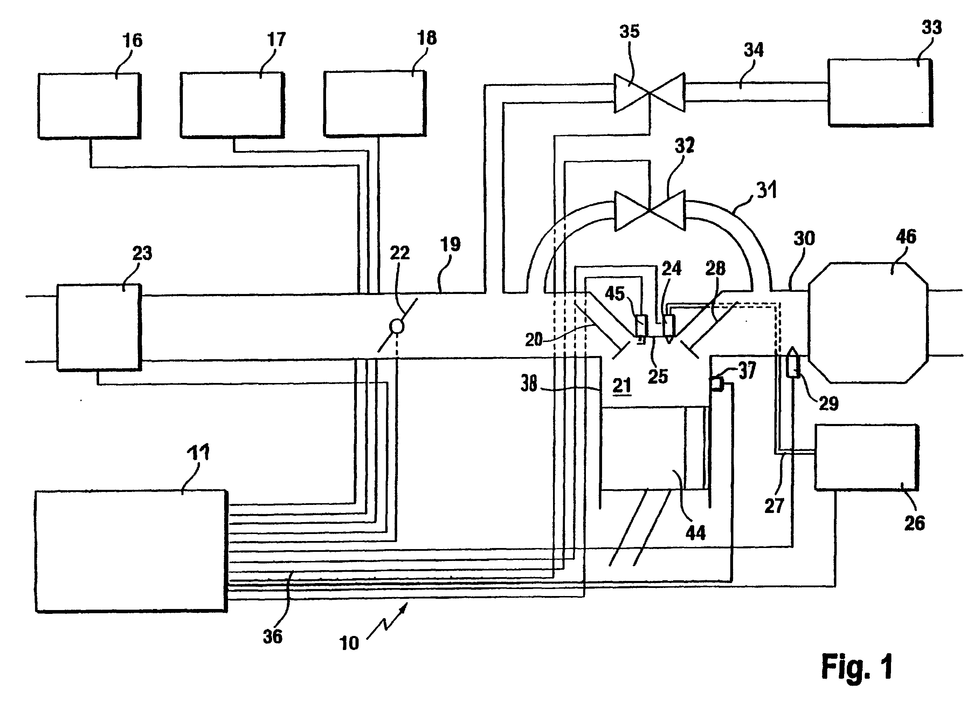

Wie in der Figur 1 dargestellt, wird bei einer Brennkraftmaschine mit Direkteinspritzung 10 Frischluft mittels eines Saugrohres 19 über ein Einlaßventil 20 einem Zylinder 38 bzw. einer Brennkammer 21 im Zylinder 38 zugeführt. Über eine Drosselklappe 22 kann die Menge der in die Brennkammer 21 zugeführten Frischluft gesteuert werden. Ein Luftmengenmesser 23 erfaßt die in die Brennkraftmaschine 10 einströmende Frischluft.

Ein Einspritzventil 24 und eine Zündkerze 45 sind im Zylinderkopf 25 angeordnet. Mittels einer Hochdruckpumpe 26 wird der Kraftstoff auf einen Arbeitsdruck gebracht und über eine Kraftstoffleitung 27 und Einspritzventile 24 in die Brennkammer 21 eingespritzt. Mit Hilfe der Zündkerze 45 wird der eingespritzte Kraftstoff entzündet. Durch die Ausdehnung des entzündeten Kraftstoffs wird ein Kolben 44 angetrieben. Weiterhin weist die Brennkammer 21 ein Auslaßventil 28 zum Ausstoß der bei einer Verbrennung entstehenden Abgase auf.

Ein Klopfsensor 37 und/oder ein Ionenstromsensor 37 sind am Zylinder 38 angeordnet. Mit Hilfe des Klopfsensors 37 werden Schwingungen, die bei der Verbrennung entstehen, erfaßt. Mit Hilfe des Ionenstromsensors 37 werden die während einer Verbrennung entstehenden Ionen erfaßt. Durch Auswerten des Signals des Klopfsensors und/oder des Ionenstromsensors 37 kann das Verbrennungsverhalten der Brennkraftmaschine erfaßt werden, inbesondere kann auf eine "klopfende" Verbrennung geschlossen werden.

Eine Lambdasonde 29 ist in einem Abgasrohr 30 angeordnet. Mit Hilfe der Lambdasonde 29 im Abgasrohr 30 kann der Sauerstoffanteil im Abgas gemessen werden, wodurch das Luft-Kraftstoff-Verhältnis im Gemisch ermittelt werden kann. Im Abgasrohr 30 ist weiterhin ein Katalysator 46 angeordnet. Der Katalysator 46 hat die Aufgabe schädliche Abgaskomponenten wie CO, HC und NO in CO₂, H₂O und N₂ umzuwandeln.

Eine AGR-Leitung 31 verbindet das Ausstoßrohr 30 mit dem Saugrohr 19. Aufgrund des höheren Drucks im Ausstoßrohr 30 wird ein Teil der Abgase vom Ausstoßrohr 30 in das Ansaugrohr 19 geleitet. Mit Hilfe des AGR-Ventils 32 kann der Abgasstrom in der AGR-Leitung 31 gesteuert werden.

Von einem Kraftstofftank bzw. Aktivkohlebehälter 33 führt eine Tankentlüftungsleitung 34 zum Saugrohr 19, wodurch zusätzlich Kraftstoff in das Saugrohr 19 und damit auch in den Brennraum 21 gelangen kann. Mittels eines Tankentlüftungsventils 35 kann der Kraftstofffluß in der Tankentlüftungsleitung 34 gesteuert werden.

Die Steuerung der gesamten Brennkraftmaschine 10 erfolgt mittels eines Steuergeräts 11. Weiterhin kann das Steuergerät 11 ein Getriebe 16, ein Bremssystem 17 und/oder beliebige weitere elektromechanische Systeme 18 steuern. Über Signal- und Steuerleitungen 36 sind die verschiedenen Sensoren und Aktuatoren mit dem Steuergerät 11 verbunden.

Die Brennkraftmaschine 10 kann in verschiedenen Betriebsarten betrieben werden, die sich im wesentlichen durch den Einspritzzeitpunkt, den Zündzeitpunkt und die Zylinderfüllung unterscheiden. Zwischen den Betriebsarten der Brennkraftmaschine kann mit Hilfe des Steuergeräts 11 umgeschaltet werden. Die wesentlichen Betriebsarten der Brennkraftmaschine sind der Homogenbetrieb HOM und der Schichtbetrieb SCH.

Im Homogenbetrieb HOM, wird der Kraftstoff von dem Einspritzventil 24 während einer durch die Kolbenbewegung hervorgerufenen Ansaugphase in den Brennraum 21 eingespritzt. Über die Drosselklappe 22 wird gleichzeitig Luft angesaugt. Die angesaugte Luft verwirbelt den Kraftstoff, der sich dadurch im Brennraum annähernd gleichmäßig bzw. homogen verteilt. Das Luft-Kraftstoff-Gemisch wird anschließend verdichtet, um dann von einer Zündkerze 45 entzündet zu werden. Das entzündete Kraftstoff-Luft-Gemisch dehnt sich aus und treibt den Kolben 44 an. Das entstehende Drehmoment hängt im Homogenbetrieb im wesentlichen von der Stellung der Drosselklappe 22 ab und ist damit im wesentlichen proportional zur Frischgasfüllung RL in den Zylindern. Um ein hohes Drehmoment und eine geringe Schadstoffentwicklung bei der Verbrennung zu erzielen, wird das Luft-Kraftstoff-Gemisch möglichst auf Lambda=1 oder Lambda<1 eingestellt. Der Homogenbetrieb wird vorzugsweise im Vollastbereich der Brennkraftmaschine eingestellt, er kann jedoch auch im gesamten Betriebsbereich der Brennkraftmaschine eingestellt werden.

Im Schichtbetrieb SCH wird die Drosselklappe 22 weit geöffnet, wodurch die Brennkraftmaschine nahezu ungedrosselt betrieben wird. Der Kraftstoff wird während der Verdichtungsphase derart eingespritzt, daß sich zum Zündzeitpunkt eine zündfähige Luft-Kraftstoff-Wolke in der unmittelbaren Umgebung der Zündkerze befindet. Dann wird die Luft-Kraftstoff-Wolke von der Zündkerze 45 entzündet und durch die folgende Ausdehnung der entzündeten Luft-Kraftstoff-Wolke der Kolben 44 angetrieben. Das entstehende Drehmoment hängt im Schichtbetrieb im wesentlichen von der eingespritzten Kraftstoffmasse ab. Der Schichtbetrieb wird im Teillastbereich der Brennkraftmaschine eingestellt.

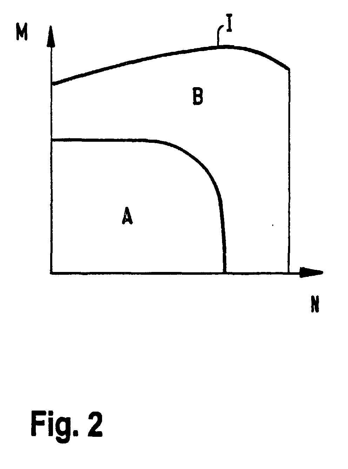

In der Figur 2 ist das Betriebskennfeld einer Brennkraftmaschine mit Direkteinspritzung dargestellt.

In Figur 2 bezeichnet M das abgegebene Drehmoment und N die Drehzahl der betreffenden Brennkraftmaschine, A den Betriebsbereich in dem der Schichtbetrieb und B den Betriebsbereich in dem der Homogenbetrieb der Brennkraftmaschine eingestellt wird, die Kennlinie I bezeichnet die Betriebsgrenze der Brennkraftmaschine, die unter anderem auch durch die Klopfgrenze der Brennkraftmaschine 10 bestimmt wird.

Im Steuergerät 11 wird fortlaufend die Drehzahl N erfaßt. Das Drehmoment M wird im Homogenbetrieb auf der Basis der Zylinderfüllung RL und im Schichtbetrieb auf der Basis der eingespritzten Kraftstoffmasse RK bestimmt. Auf der Basis der erfaßten Zylinderfüllung RL und der Drehzahl N oder der eingespritzten Kraftstoffmasse RK und der Drehzahl N wird ein Klopfneigungssignal bestimmt. Das Klopfneigungssignal wird mit einem Schwellenwert verglichen und bei Übersteigen dieses Schwellenwerts werden Doppeleinspritzungen eingeleitet.

Doppeleinspritzung bedeutet in diesem Zusammenhang, daß die erste Einspritzung im Ansaugtakt und die zweite Einspritzung im Kompressionstakt erfolgt. Die zweite Einspritzung bewirkt, daß das im Brennraum 21 aufgrund der ersten Einspritzung vorhandene Luft-Kraftstoff-Gemisch gekühlt wird, wodurch die Gefahr einer unkontrollierten Entflammung des Luft-Kraftstoff-Gemischs vermindert wird.

Weiterhin wird durch Doppeleinspritzungen in klopfgefährdeten Betriebsbereichen auch vor Erreichen der motorischen Betriebsgrenzen die Klopfgrenze der Brennkraftmaschine 10 heraufgesetzt bzw. das Klopfverhalten verbessert. Insbesondere wird beim Durchführen von gezielten Doppeleinspritzungen im Bereich der Betriebsgrenzen eine Erhöhung des abgegebenen maximalen Drehmoments um bis zu 5% erreicht.

Das Verhältnis der einzuspritzenden Kraftstoffmasse in der ersten und in der zweiten Einspritzung wird in Abhängigkeit vom Ausmaß des Klopfneigungssignals und/oder aus einem im Steuergerät 11 abgelegten motorparameterspezifischen Kennfeld ermittelt. Je nach Typ und Betriebszustand der Brennkraftmaschine 10 und in Abhängigkeit vom Ausmaß des Klopfneigungssignals variiert das Verhältnis von erster und zweiter Einspritzung zwischen 30 und 70 %. Die erste Einspritzung erfolgt typischerweise 330° vor OT und die zweite Einspritzung erfolgt typischerweise 80° vor OT.

Bei diesem Ausführungsbeispiel des erfindungsgemäßen Kraftstoffeinspritzverfahrens wird das Klopfneigungssignal für jeden einzelnen Zylinder der Brennkraftmaschine 10 kontinuierlich erfaßt und ausgewertet. Dadurch wird es möglich, bei Erkennen einer Klopfgefährdung in einzelnen Zylindern Doppeleinspritzungen durchzuführen.

Bei Erkennen einer "klopfenden" Verbrennung werden zusätzlich zur Klopfregelung durch Zündwinkelspätverstellung Doppeleinspritzungen durchgeführt. Hierdurch wird die Zündwinkelregeltiefe der Klopfregelung reduziert, was zu einem verbesserten Regelergebnis, einer Verbrauchsreduzierung und einer Erhöhung des Drehmoments führt.

## Patentansprüche

1. Kraftstoffeinspritzverfahren für eine Brennkraftmaschine (10), insbesondere eines Kraftfahrzeugs, wobei eine erste Einspritzung in einem Ansaugtakt erfolgt, **dadurch gekennzeichnet, daß** ein Klopfneigungssignal bestimmt wird, das die Gefahr von auftretendem Klopfen charakterisiert, und daß wenigstens eine zweite Einspritzung erfolgt, wenn das Klopfneigungssignal einen Schwellenwert übersteigt.

2. Verfahren nach Anspruch 1, **dadurch gekennzeichnet, daß** die zweite Einspritzung in einem Kompressionstakt erfolgt.

3. Verfahren nach Anspruch 1 oder 2, **dadurch gekennzeichnet, daß** die wenigstens zweiten Einspritzungen vorzugsweise dann vorgesehen werden, wenn sich die Brennkraftmaschine (10) im Bereich des max. Drehmoments oder in weiteren in einem Kennfeld gekennzeichneten klopfgefährdeten Bereichen bei einer momentanen Drehzahl befindet.

4. Verfahren nach Anspruch 1 oder 2, **dadurch gekennzeichnet, daß** in das Klopfneigungssignal die Ausgangssignale eines Klopfsensors (37) und/oder Ionestromsensors (37) mit einbezogen werden.

5. Verfahren nach wenigstens einem der vorhergehenden Ansprüche, **dadurch gekennzeichnet, daß** das Klopfneigungssignal ausgehend von Betriebskenngrößen der Brennkraftmaschine (10) gebildet wird.

6. Verfahren nach Anspruch 4, **dadurch gekennzeichnet, daß** das Klopfneigungssignal ausgehend von der Zylinderfüllung und/oder der eingespritzten Kraftstoffmasse und/oder der Drehzahl gebildet wird.

7. Verfahren nach wenigstens einem der vorhergehenden Ansprüche, **dadurch gekennzeichnet, daß** bei Erkennen einer klopfenden Verbrennung zusätzlich zu einer Klopfregelung durch Zünwinkelspätverstellung Doppeleinspritzungen durchgeführt werden.

8. Verfahren nach wenigstens einem der vorhergehenden Ansprüche, **dadurch gekennzeichnet, daß** das Verhältnis der einzuspritzenden Kraftstoffmenge in der ersten und in der wenigstens zweiten Einspritzung in Abhängigkeit vom Ausmaß des Klopfneigungssignals und/oder motorparameterspezifisch aus einem Kennfeld bestimmt wird.

9. Verfahren nach Anspruch 8, **dadurch gekennzeichnet, daß** der Aufteilungsfaktor des eingespritzten Kraftstoffs in der ersten und in der wenigstens zweiten Einspritzung 30 bis 70 Prozent beträgt.

10. Verfahren nach wenigstens einem der vorhergehenden Ansprüche, **dadurch gekennzeichnet, daß** die erste Einspritzung 330° vor dem oberen Totpunkt und die zweite Einspritzung 80° vor dem oberen Totpunkt erfolgt.

11. Verfahren nach wenigstens einem der vorhergehenden Ansprüche, **gekennzeichnet durch** seine Anwendung in einer Brennkraftmaschine mit Direkteinspritzung.

12. Verfahren nach wenigstens einem der vorhergehenden Ansprüche, **dadurch gekennzeichnet, daß** die wenigstens zweite Einspritzung zylinderspezifisch oder zylinderbankspezifisch erfolgt.

13. Elektrisches Speichermedium, insbesondere Read-Only-Memory, für ein Steuergerät einer Brennkraftmaschine, insbesondere eines Kraftfahrzeugs, auf dem ein Programm gespeichert ist, das auf einem Rechengerät, insbesondere auf einem Mikroprozessor, ablauffähig und zur zur Anwendung bei einem Verfahren nach einem der voranstehenden Ansprüche.

14. Vorrichtung zur Durchführung des Verfahrens nach wenigstens einem der Ansprüche 1 bis 12, **dadurch gekennzeichnet, daß** Mittel vorgesehen sind zur Bildung eines Klopfneigungssignals, das die Gefahr von auftretendem Klopfen charakterisiert, und daß weitere Mittel wenigstens eine zweite Einspritzung von Kraftstoff in eine Brennkraftmaschine nach einer ersten Einspritzung im Ansaugtakt bewirken, wenn das Klopfneigungssignal einen Schwellenwert übersteigt.

## Claims

1. Fuel injection method for an internal combustion engine (10), in particular of a motor vehicle, a first injection taking place in an intake cycle, **characterized in that** a knocking tendency signal which characterizes the risk of knocking occurring is determined, and **in that** at least a second injection occurs if the knocking tendency signal exceeds a short value.

2. Method according to Claim 1, **characterized in that** the second injection takes place in a compression cycle.

3. Method according to Claim 1 or 2, **characterized in that** the at least second injections are preferably provided when the internal combustion engine (10) is in the region of the maximum torque or in further regions where there is a risk of knocking and which are **characterized in** a characteristic diagram, at an instantaneous rotational speed.

4. Method according to Claim 1 or 2, **characterized in that** the output signals of a knocking sensor (37) and/or ion current sensor (37) are included in the knocking tendency signal.

5. Method according to at least one of the preceding claims, **characterized in that** the knocking tendency signal is formed on the basis of operating characteristic variables of the internal combustion engine (10).

6. Method according to Claim 4, **characterized in that** the knocking tendency signal is formed on the basis of the cylinder charge and/or the injected fuel mass and/or the rotational speed.

7. Method according to at least one of preceding claims, **characterized in that**, when a knocking combustion is detected, double injections are carried out in addition to a knocking control by adjusting the ignition angle in the retarded direction.

8. Method according to at least one of the preceding claims, **characterized in that** the ratio of the quantity fuel to be injected in the first injection and in the at least second injection is determined as a function of the magnitude of the knocking tendency signal and/or is determined from a characteristic diagram on an engine-parameter-specific basis.

9. Method according to Claim 8, **characterized in that** the division factor of the injected fuel in the first injection and in the at least second injection is 30 to 70%.

10. Method according to at least one of the preceding claims, **characterized in that** the first injection takes place 330° before the top dead centre, and the second injection takes place 80° before the top dead centre.

11. Method according to at least one of the preceding claims, **characterized by** its application in an internal combustion engine with direct injection.

12. Method according to at least one of the preceding claims, **characterized in that** the at least second injection takes place on a cylinder-specific basis or cylinder-bank-specific basis.

13. Electrical storage medium, in particular read-only memory, for a controller of an internal combustion engine, in particular of a motor vehicle, on which a program which can run on a computing unit, in particular on a microprocessor, is stored, and for application in a method according to one of the preceding claims.

14. Device for carrying out the method according to at least one of Claims 1 to 12, **characterized in that** means are provided for forming a knocking tendency signal which characterizes the risk of knocking occurring, and **in that** further means bring about at least a second injection of fuel into an internal combustion engine after a first injection in the intake cycle when the knocking tendency signal exceeds a threshold value.

## Revendications

1. Procédé d'injection de carburant pour un moteur à combustion interne (10), notamment d'un véhicule, une première injection ayant lieu dans une course d'admission,
**caractérisé en ce qu'**
- un signal de tendance au cliquetis, qui caractérise le risque d'apparition de cliquetis est défini, et
- au moins une deuxième injection a lieu lorsque le signal de tendance au cliquetis dépasse une valeur seuil.

2. Procédé selon la revendication 1,
**caractérisé en ce que**
la deuxième injection a lieu dans une course de compression.

3. Procédé selon la revendication 1 ou 2,
**caractérisé en ce qu'**
au moins la deuxième injection est prévue de préférence lorsque le moteur à combustion interne (10) se trouve dans la zone du couple maximum ou dans d'autres zones compromises par cliquetis **caractérisées par** un champ caractéristique à une vitesse de rotation instantanée.

4. Procédé selon la revendication 1 ou 2,
**caractérisé en ce que**
les signaux de sortie d'un capteur de cliquetis (37) et/ou d'un capteur de courant ionique (37) sont associés dans le signal de tendance au cliquetis.

5. Procédé selon l'une quelconque des revendications précédentes,
**caractérisé en ce que**
le signal de tendance au cliquetis est formé à partir des valeurs de caractéristiques de fonctionnement du moteur à combustion interne (10).

6. Procédé selon la revendication 4,
**caractérisé en ce que**
le signal de tendance au cliquetis est formé à partir du remplissage du cylindre et/ou de la masse de carburant injectée et/ou de la vitesse de rotation.

7. Procédé selon au moins l'une quelconque des revendications précédentes,
**caractérisé en ce que**
des doubles injections sont réalisées lorsqu'une combustion à cliquetis est reconnue en plus d'un réglage de cliquetis par l'angle de retard à l'amorçage.

8. Procédé selon au moins l'une quelconque des revendications précédentes,
**caractérisé en ce que**
le rapport de la quantité de carburant à injecter dans la première et au moins la deuxième injection est défini en fonction de l'étendue du signal de tendance au cliquetis et/ou spécifiquement aux paramètres du moteur à partir d'un champ caractéristique.

9. Procédé selon la revendication 8,
**caractérisé en ce que**
le facteur de répartition du carburant injecté dans la première et au moins dans la deuxième injection se monte à 30 à 70 pour-cent.

10. Procédé selon au moins l'une quelconque des revendications précédentes,
**caractérisé en ce que**
la première injection a lieu à 330° avant le point mort haut et la deuxième injection à 80° avant le point mort haut.

11. Procédé selon au moins l'une quelconque des revendications précédentes,
**caractérisé par**
son utilisation dans un moteur à combustion interne à injection directe.

12. Procédé selon au moins l'une quelconque des revendications précédentes,
**caractérisé en ce qu'**
au moins la deuxième injection a lieu en fonction du cylindre ou du banc de cylindre.

13. Support de mémoire électrique, notamment une mémoire morte (read-only memory), pour une unité de commande d'un moteur à combustion interne, notamment d'un véhicule, dans lequel est mémorisé un programme exploitable sur un calculateur, notamment un microprocesseur, et utilisable dans un procédé selon l'une des revendications précédentes.

14. Dispositif pour exécuter le procédé selon au moins l'une quelconque des revendications 1 à 12,
**caractérisé en ce que**
- des moyens sont prévus pour former un signal de tendance au cliquetis qui caractérise le risque d'apparition de cliquetis, et
- d'autres moyens opèrent au moins une deuxième injection de carburant dans un moteur à combustion interne après une première injection en course d'admission lorsque le signal de tendance au cliquetis dépasse une valeur seuil.
